(19) **Europäisches Patentamt / European Patent Office / Office européen des brevets**

(11) **EP 3 748 414 A1**

(12) **EUROPEAN PATENT APPLICATION**

(43) Date of publication:
**09.12.2020 Bulletin 2020/50**

(51) Int Cl.:
**G02B 21/26** (2006.01)   **G01N 21/64** (2006.01)
**G02B 21/36** (2006.01)   **G02B 21/12** (2006.01)

(21) Application number: **19179071.6**

(22) Date of filing: **07.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **VAN DER ZAAG, Pieter Jan**
**5656 AE Eindhoven (NL)**

• **BOAMFA, Marius Iosif**
**5656 AE Eindhoven (NL)**
• **ASSELMAN, Michel Jozef Agnes**
**5656 AE Eindhoven (NL)**
• **VULDERS, Roland Cornelis Martinus**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **A SIMPLE AND EFFICIENT BIOPSY SCANNER WITH IMPROVED Z-AXIS RESOLUTION**

(57) An optical imaging apparatus with an improved axial resolution comprises at least one optical detection assembly (24) and at least one translation unit (26, 26a, 26b). The at least one translation unit (26, 26a, 26b) is configured to move the sample container and the at least one optical detection assembly (24) relative to each other in a first scanning direction (38) to obtain a plurality of first images of the sample. The apparatus further comprises a rotation unit (28), wherein t he rotation unit (28) is configured to either: i) rotate the at least one optical detection assembly around an axis of rotation by an angle of about 90 degrees such that a second scanning direction (48) is orthogonal to the first scanning direction (38) or ii) rotate the sample container around an axis of rotation by an angle of about 90 degrees such that the second scanning direction is parallel to the first scanning direction (38) . In both cases, the axis of rotation is perpendicular to a plane defined by the optical axis of the optical detection assembly (24) and the first scanning direction. Images acquired along the first and second scanning direction (38, 48) are combined to create a three-dimensional reconstruction of the sample.

**FIG. 3A**

EP 3 748 414 A1

**(Cont. next page)**

FIG. 3B

**Description**

FIELD OF THE INVENTION

The present invention relates to optical imaging. In particular, the present invention relates to an apparatus and a method for obtaining a plurality of images of a sample arranged in relation to a sample container, a computer program element, and a computer readable medium.

BACKGROUND OF THE INVENTION

In microscopy, the term 'resolution' is used to describe the ability of a microscope to distinguish details. The resolution of a microscope is intrinsically linked to the numerical aperture (NA) of the optical components as well as the wavelength of light, which is used to examine a specimen. When considering the resolution, the lateral resolution in the plane perpendicular to the optical axis is usually different from the axial resolution in the direction along the optical axis. For example, for a setup with a configuration of a wavelength of 650 nm, a numerical aperture of 0.4 and 10× magnification, the lateral resolution may be around 1 $\mu$m and the axial resolution may be around 5 $\mu$m. A three-dimensional reconstruction of the sample may thus have a different resolution in the horizontal plane and in the axial direction perpendicular to the horizontal plane. The data in the axial direction are elongated, which may have some negative effects for the analysis of the sample. For example, for a sample with small particles having a diameter of less than 5 $\mu$m, the axial resolution may not be adequate.

SUMMARY OF THE INVENTION

There may be a need to provide an optical imaging apparatus with an improved axial resolution.

The object of the present invention is solved by the subject-matter of the independent claims, wherein further embodiments are incorporated in the dependent claims. It should be noted that the following described aspects of the invention apply also for the apparatus, the method, the computer program element, and the computer readable medium.

According to a first aspect of the present invention, an apparatus is provided for obtaining a plurality of images of a sample arranged in relation to a sample container. The apparatus comprises at least one optical detection assembly and at least one translation unit. The at least one optical detection assembly comprises an image acquisition device. The at least one optical detection assembly has an optical axis and an object plane. The object plane comprises an image acquisition area from which electromagnetic waves can be detected as an image by the image acquisition device. The at least one translation unit and the at least one optical detection assembly are arranged so that at least a part of the sample is intersected by the image acquisition area. The at least one translation unit is configured to move the sample container and the at least one optical detection assembly relative to each other in a first scanning direction along a first scanning path to perform a first scan to obtain a plurality of first images of the sample. The apparatus further comprises a rotation unit configured to perform one of the following functions: i) The rotation unit is configured to rotate the at least one optical detection assembly around an axis of rotation by an angle of about 90 degrees such that a second scanning direction is orthogonally to the first scanning direction, The axis of rotation is perpendicular to a plane defined by the optical axis and the first scanning direction. The at least one translation unit is configured to move the sample container and the at least one optical detection assembly relative to each other in the second scanning direction along a second scanning path to perform a second scan to obtain a plurality of second images of the sample for being combined with the plurality of first images to create a three-dimensional reconstruction of the sample. ii) The rotation unit is configured to rotate the sample container around an axis of rotation by an angle of about 90 degrees. The axis of rotation is perpendicular to a plane defined by the optical axis and the first scanning direction. The at least one translation unit is configured to move the sample container and the at least one optical detection assembly relative to each other in a second scanning direction along a second scanning path to perform a second scan to obtain a plurality of second images of the sample for being combined with the plurality of first images to create a three-dimensional reconstruction of the sample. The second scanning direction is parallel to the first scanning direction.

In other words, in order to solve this axial resolution limitation, it is proposed to rotate an optical axis of an imaging system by about 90 degrees after the first normal scan. The first normal scan may acquire a sequence of images along a horizontal plane for creating a two-dimensional image slice. The first scan may also acquire successive image slices in a depth direction for creating a "z-stack", which can be processed by certain software to create a three-dimensional reconstruction of the sample. If a setup is used with a configuration of a wavelength of 650 nm, a numerical aperture of 0.4 and 10× magnification, the three-dimensional rendering of the sample may have a resolution of 1 $\mu$m in the horizontal plane and a resolution of 5 $\mu$m in the axial direction. The optical axis is an imaginary line that defines a path along which light propagates from the sample to an image acquisition device, e.g. a camera, of the imaging system or from the sample to a first optical element that alters the direction of the light path. As previously mentioned, the lateral resolution corresponds to the resolution in a plane perpendicular to the optical axis. Thus, by turning the optical axis by about 90 degrees, the second extra scan can have a resolution of 1 $\mu$m in the vertical plane, i.e. in the axial direction of the first scan. The second scan may also acquire successive image slices for creating a "z-stack". Images from the first scan and the second scan may be simply combined to create a three-dimensional reconstruction of the sample with a resolution of 1 μm in both the horizontal plane and the axial direction. In other words, the second extra scan then provides the axial information of the first scan at the desired 1 μm resolution, while maintaining a high imaging speed of the system. In addition, as the sample is not moved, the registration is maintained and the input of the second extra scan can simply be combined with the first scan, that is, there is no need for registering the second extra scan to the previous one.

Alternatively, it is proposed to rotate the sample container, e.g. a biopsy container, by about 90 degrees after the first normal scan. The biopsy container may be a closed off tube or cube. In other words, the optical axis of the imaging system remains unchanged. Instead, the sample container is rotated by about 90 degrees. Thus, the horizontal plane of the sample container in the first scan becomes a vertical plane of the sample container in the second extra scan. Images from the first scan and the second scan may be combined to create a three-dimensional reconstruction of the sample, which also have a desired resolution of 1 μm in both the horizontal plane and the axial direction. During the rotation of the sample, the sample may be moved relative to the sample container. Registration of the images from the second extra scan to the images from the first scan may be needed.

The term "an angle of about 90 degrees" as used herein may refer to an angle in a range between 85 degrees and 95 degrees, optionally in a range between 88 degrees and 92 degrees, or optionally in a range between 88.9 degrees and 90.1 degrees. It would be recognized by those skilled in the art that the deviation from exact 90 degrees may result from the precision or accuracy of the rotation unit, which defines the resolution of the rotation. For example, for a rotation unit that offers a precision position control with a resolution of up to 1 degree, an error of up to ±1 degree may be expected. For a rotation unit that offers a precision position control with a resolution of up to 0.5 degree, an error of up to ±0.5 degree may be expected.

Examples of the sample may include tissue samples, which may be obtained from a sample selected from e.g. a liver sample, a kidney sample, a muscle sample, a brain sample, a lung sample, a skin sample, a thymus sample, a spleen sample, a gastrointestinal tract sample, a pancreas sample, a prostate sample, a breast sample, or a thyroid gland sample. The sample may be a biopsy sample. Alternatively, the sample may be from a resection. The tissue samples may originate from e.g. a human sample, or from an animal such as a mouse sample, a rat sample, a monkey sample, or a dog sample. The samples may be organoid or tumoroid cultures. The sample may include an inhomogeneous liquid sample comprising particles. These liquid samples may be of human or animal origin and may be blood, urine, milk or other bodily fluids. The particles may be of biological origin such as embryo, bacteria, parasites, fungus, or cells. The cells may be blood cells, such as white and/or red blood cells, somatic cells, yeast cells, oozytes, blastocytes, cygotes, and thrombosites. The particles may also be of non-biological origin such as metal debris, water drops in oil, or air bubbles in liquids, pigments in paint, and pollution in water.

Examples of the sample container may include, but not limited to, biopsy containers, cartridges, and micro- or multiwell plates.

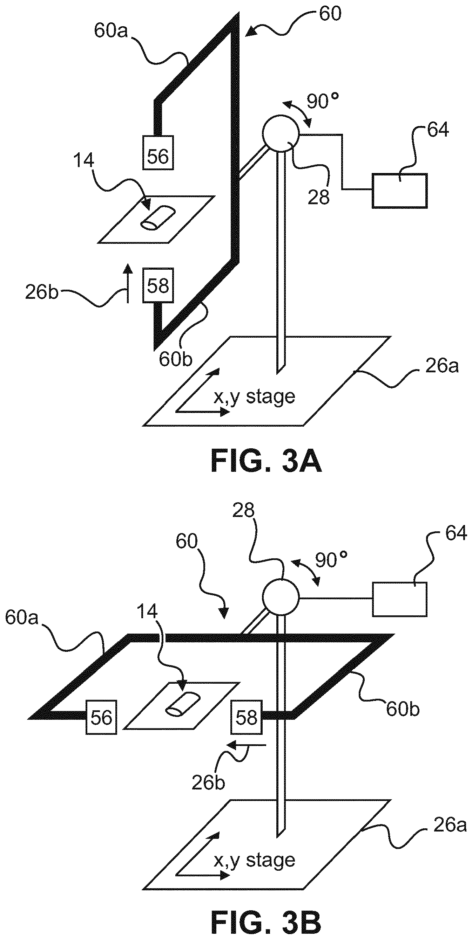

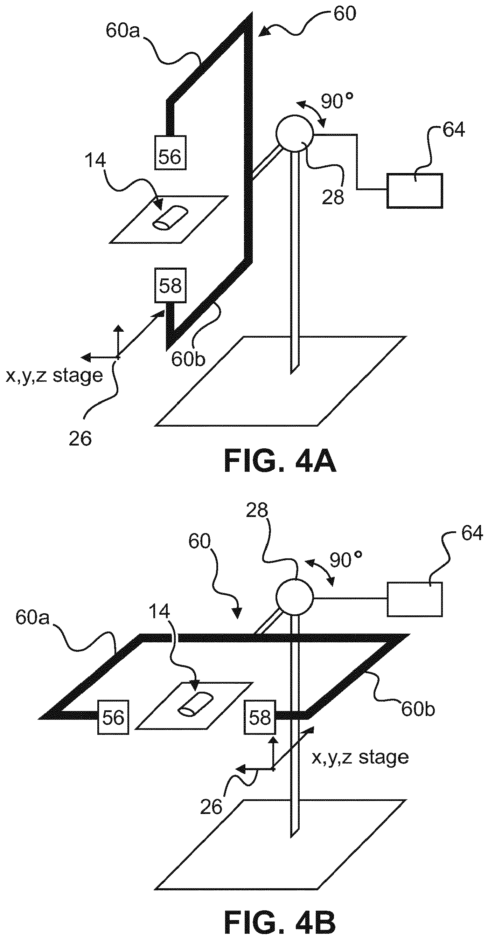

As will be explained hereafter and particularly with respect to the exemplary embodiments in Figs. 3A and 3B, and Figs. 4A and 4B, the apparatus may be configured to operate in a bright-field imaging mode, in a dark-field imaging mode, in a fluorescence imaging mode and any combination thereof. The electromagnetic waves may have wavelengths e.g. in the ultraviolet (UV) range, in the visible range, in the infrared (IR) range, and/or in the near infrared (NIR) range. For example, the apparatus may have an illumination source for illuminating the sample in a bright-field imaging mode and/or in a dark-field imaging mode. The apparatus may also have a condenser lens for focusing the illumination from the illumination source onto the sample. The illumination source may comprise a light source selected from a group of a laser, a diode laser, an LED, a light bulb, a supercontinuum source or a white source. Additionally or alternatively, the apparatus may have an excitation light source for emitting excitation light onto the sample for creating fluorescence light in a fluorescence imaging mode. The excitation light source is a light source, e.g. an LED light source, capable of providing excitation light matched to a fluorescent dye. Optionally, a plurality of excitation light sources, each targeted to a different type of fluorescent dye, may be provided. An optical filter arrangement may be provided, which may comprise a dichroic filter, an emission filter, and/or an excitation filter. Alternatively, a prism setup may be used to select excitation wavelength and/or emission wavelength.

It may be preferred to combine two or more imaging modes in some applications, e.g. in a three-dimensional biopsy detection. For example, the advantage of using dark-field imaging in combination with bright-field imaging may be that the contrast enhancement works differently in dark-field imaging then bright-field imaging. In dark-field imaging the most scattering entity provides the brightest signal while they would be the weakest in the bright-field imaging. Combining these two imaging modalities may thus give extra information about the tissue. They may lead, for instance, to a better assessment of where the ducts, tubuli, open cavities, or other features are within the tissue being imaged. For example, the advantage of using dark-field imaging in combination with fluorescence imaging is that it is possible to detect and to visualise the three-dimensional morphology or tissue architecture of a biopsy. Boundaries and internal cavities of biopsy material may be identified using a combination of dark-field imaging and fluorescence imaging. This means that a single staining can be used to image cancer cells within a biopsy, for example, and their growth pattern, and that the invasiveness can be assessed in comparison to the bright-field image, because cancer, for example, typically arises at the epithelial cell layers, which line tubuli or ducts in a tissue.

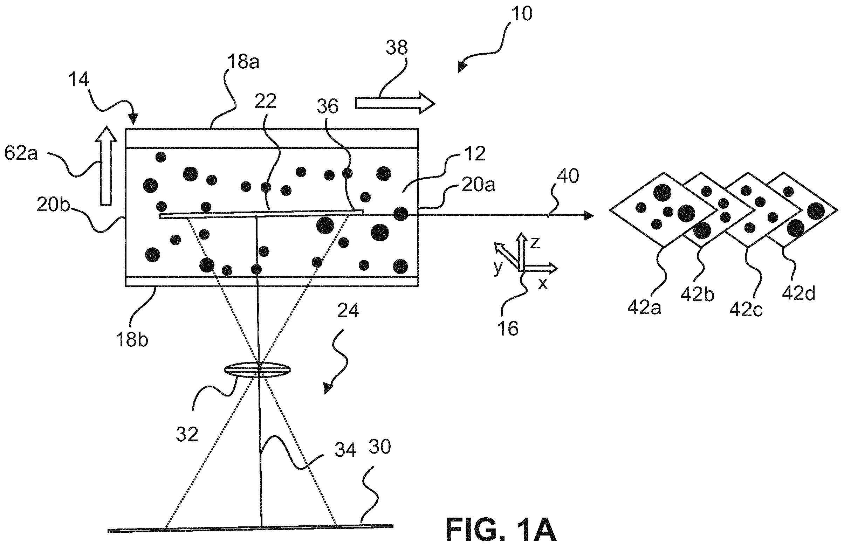

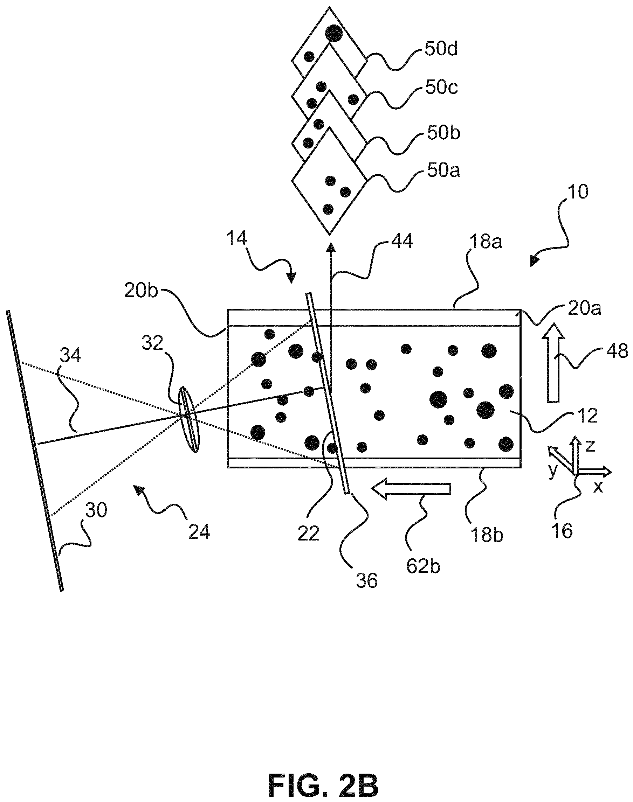

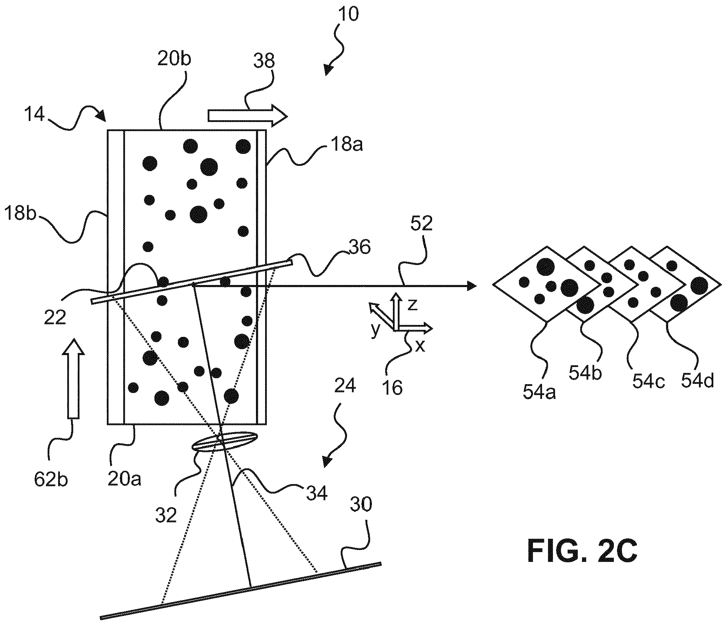

As will be explained hereafter and particularly with respect to the exemplary embodiments in Figs. 1A to 1C, the object plane of the at least one optical detection assembly may be parallel to a horizontal plane. The apparatus can thus perform a non-tilted angle scanning to acquire a sequence of non-tilted images along the horizontal plane. In some examples, as illustrated in Figs. 2B to 2C, the object plane may be tilted relative to a horizontal plane to perform a tilted angle scanning for acquiring a sequence of tilted images along the horizontal plane. The tilted angle may be in a range between 0.3 to 89.7 degrees.

As will be explained hereafter and particularly with respect to the exemplary embodiments in Figs. 1A to 1C, the scanning path may comprise any movement of the object plane and the sample relative to each other. In particular, the scanning path may comprise a substantially straight scanning line arranged along a scanning axis. The scanning path may also be defined by a substantially rotational movement, in which case the optical axis and the local tangential of the rotational movement has an angle. In an example, the scanning path is confined in a plane, such as a straight line, a circular movement, a spiral movement, or any other suitable path. In some examples, the sample container is mounted to a movable sample stage, which is configured to move the sample container relative to the at least one optical detection assembly. In some examples, the at least one optical detection assembly may be mounted to a translation stage for being moved relative to the sample container. The movement may be in a substantially continuous manner and in substantially identical movement steps of a predetermined step length, and during the movement a plurality of images may be acquired with a predetermined time interval. Examples of a range of the predetermined time interval may include, but not limited to, about $10^{-9}$ s to $10^3$ s, about $10^{-4}$ s to 10 s, about $10^{-3}$ s to $10^2$ s. As an example, a value for a single image to be acquired may be set to 0.32 s before a next image is acquired. Using this procedure, the images will be acquired with a predetermined spacing in the sample and the measurements will proceed fast.

The at least one optical detection assembly is a unit comprising at least one image acquisition device capable of converting the light intensity incident on the image acquisition device into proportional electronic signals representative of the dark-field, bright-field, and/or fluorescence light received from the sample. Such an image acquisition device may be implemented using, for example, a charge-coupled device or a CMOS imaging sensor, coupled to appropriate analogue and/or signal processing circuitry. The at least one optical detection assembly may comprise two or more optical detection assemblies. For example, the at least one optical detection assembly may comprise a first optical detection assembly and a second optical detection assembly. The second optical detection assembly may be similar to the first optical detection assembly or different from the first optical detection assembly. For example, the first and second optical detection assemblies may have different magnifications or viewing areas. This setup may be preferred to be used for scanning for particles using an optical detection assembly with a larger viewing area and to investigate the particle under larger magnification using an optical detection assembly with a smaller viewing area. The rotation of the at least one optical detection assembly involves the rotation of the first optical detection assembly and the rotation of the second optical detection assembly. This may be done either simultaneously or subsequently.

The at least one translation unit may include one or more translation stages or translation mounts, which may be equipped with stepper motor, direct drive, DC servo motors, or piezo resonant motors. The rotation unit may include one or more rotation stages or rotation mounts, which may be equipped with stepper motor, direct drive, DC servo motors, or piezo resonant motors to perform the rotation. Preferably, the rotation unit is configured to offer a precision position control with a resolution of up to 1 degree. In some examples, the rotation unit may be configured to offer precision position control with a resolution of up to 0.5 degree. The precision position control may reduce an error in rotationally positioning the at least one optical detection assembly or the sample container, thereby reducing a negative impact of the error on the three-dimensional reconstruction of the sample.

According to an embodiment of the present invention, the plurality of first images comprises a plurality of images acquired at multiple depths in a first depth direction that is perpendicular to the first scanning direction. Additionally or alternatively, the plurality of second images comprises a plurality of images acquired at multiple depths in a second depth direction that is perpendicular to the second scanning direction.

In other words, the first images may comprise multiple successive two-dimensional image slices in a depth direction for creating a "z-stack". This may be beneficial for creating a three-dimensional reconstruction of a thick sample. Each two-dimensional image slice is acquired by performing a scan along a horizontal plane. The depth direction is a direction perpendicular to the horizontal plane. The second images may also comprise multiple successive two-dimensional image slices in a depth direction for creating a "z-stack". In some examples, the apparatus may be adapted to provide an optical sectioning of the sample. In other words, the apparatus may be configured to produce clear images of focal planes deep within a thick sample. Optical sectioning may be used e.g. for determining one or more parameters characterizing particles of a liquid sample. The combination of the first and second images or the combination of the first and second images may create a three-dimensional reconstruction of the sample.

According to an embodiment of the present invention, the apparatus comprises a bright-field/dark-field imaging optical block with an illumination source for illuminating the sample within the sample container in a bright-field imaging mode and/or in a dark-field imaging mode. The rotation unit is further configured to rotate the bright-field/dark-field imaging optical block around the axis of rotation by an angle of about 90 degrees to perform the second scan.

As will be explained hereafter and particularly with respect to the exemplary embodiments in Figs. 3A and 3B, and Figs. 4A and 4B, the bright-field/dark-field imaging optical block is a group of optical components. The illumination source is a light source, e.g. a white light source or one or multiple LED light sources, optionally arranged on an opposite side of a sample to the image acquisition device. When the bright-field light source is active, its illumination penetrates through sample and the transmitted light is detected by the image sensor for generating bright-field image data of the sample in a bright-field imaging mode. The apparatus may also be configured to operate in a dark-field imaging mode, in which an optical component, e.g. a central aperture, is provided to block the central part of the illumination beam from the illumination source, thereby creating a cone of light. By rotating the bright-field/dark-field imaging optical block, the illumination source, the sample, and the at least one optical detection assembly remain in the optical path after the rotation. Hence, there is no need to re-align these optical components after the rotation.

According to an embodiment of the present invention, the bright-field/dark-field imaging optical block further comprises a condenser lens for focusing the illumination from the illumination source onto the sample.

According to an embodiment of the present invention, the apparatus comprises a fluorescence imaging optical block comprising an excitation light source configured to emit excitation light onto the sample within the sample container for creating fluorescence light in a fluorescence imaging mode. The rotation unit is configured to rotate the fluorescence imaging optical block around the axis of rotation by an angle of about 90 degrees to perform the second scan.

The excitation light source is a light source, e.g. an LED light source, capable of providing excitation light matched to a fluorescent dye. Optionally, a plurality of excitation light sources, each targeted to a different type of fluorescent dye, may be provided. The fluorescence imaging optical block may further comprise an optical filter arrangement or a prism setup. The optical filter arrangement may comprise a dichroic filter, an emission filter, and/or an excitation filter. The excitation filter is typically a bandpass filter that passes only the wavelengths absorbed by the fluorophore, thus minimizing excitation of other sources of fluorescence and blocking excitation light in the fluorescence emission band. The dichroic filter is an edge filter used at an oblique angle of incidence (typically 45°) to efficiently reflect light in the excitation band and to transmit light in the emission band. The emission filter is typically a bandpass filter that passes only the wavelengths emitted by the fluorophore and blocks all undesired light outside this band-especially the excitation light. By blocking unwanted excitation energy including UV and IR, or sample and system autofluorescence, the darkest background may be ensured. A prism-based excitation wavelength selection and/or emission wavelength selection may also be used. By rotating the fluorescence imaging optical block, the excitation light source, the optical filter arrangement, the sample, and the at least one optical detection assembly remain in the optical path after the rotation. Hence, there is no need to re-align these optical components after the rotation.

According to an embodiment of the present invention, wherein the at least one optical detection assembly is arranged in the fluorescence imaging optical block. The translation unit is provided in the fluorescence imaging optical block for moving the at least one optical detection assembly relative to the sample container in a depth direction..

The translation unit is rotatable together with the at least one optical detection assembly. Therefore, the translation unit may be a simple z-axis translation stage, as illustrated in Figs. 3A and 3B. Alternatively, as illustrated in Figs. 4A and 4B, the translation unit may be a multi-axis translation stage. This may facilitate the scanning of volumes in the depth direction.

According to an embodiment of the present invention, the first and/or second scanning path defines an angle theta relative to the object plane. The theta is in a range of about 0.3 and about 89.7 degrees.

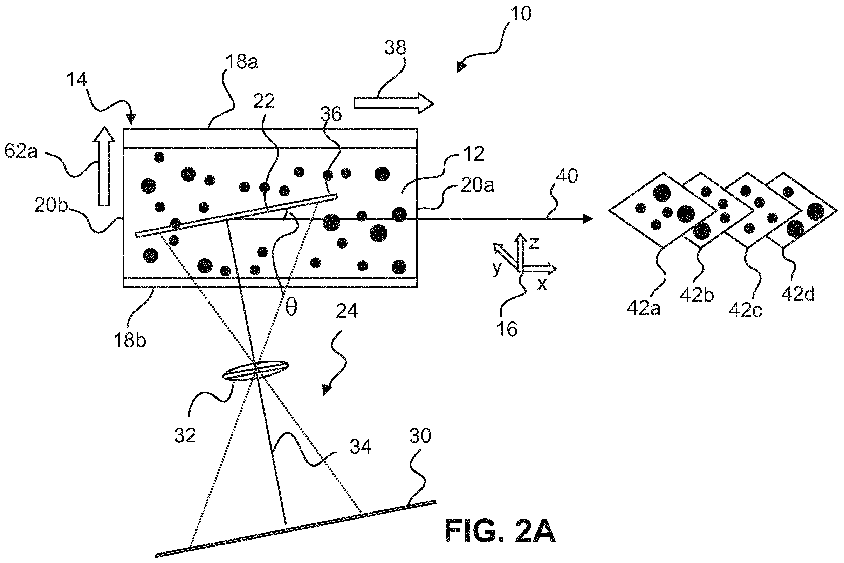

As will be explained hereafter and particularly with respect to the exemplary embodiments in Figs. 2A to 2C, such tilting may facilitate the scanning of volumes by recording a series of images to form an image stack. The tilting may enable more freedom of operation at both high and low concentrations of the sample. Examples of the theta may include, but not limited to, 3 degrees, 10 degrees, 20 degrees, and any other suitable degrees. Smaller angles may be preferred, as a too large angle may introduce a large optical aberration, especially at a large magnification.

According to an embodiment of the present invention, the apparatus comprises a scanning arm for supporting the at least one optical detection assembly. The rotation unit is configured to rotate the at least one optical detection assembly by rotating the scanning arm.

Preferably, the rotation unit may be configured to offer a precision position control of the scanning arm with a resolution of up to 1 degree, or preferably up to 0.5 degree. The precision position control may reduce an error in rotationally positioning the at least one optical detection assembly or the sample container, thereby reducing a negative impact of the error on the three-dimensional reconstruction of the sample. In some examples, the scanning arm may have one or more arms for supporting one or more optical components. The scanning arm may have any suitable shape. For example, the scanning arm may be configured to be a multi-axis arm for performing a scan along a scanning path, including a straight line, a circular movement, a spiral movement, or any other suitable path.

According to an embodiment of the present invention, the scanning arm comprises a first arm for supporting the bright-field/dark-field imaging optical block and a second arm for supporting the fluorescence imaging optical block, which is arranged to be opposite to the bright-field/dark-field imaging optical block.

The sample container may be arranged between the bright-field/dark-field imaging optical block and the fluorescence imaging optical block. The rotation of the scanning arm causes the rotation of the bright-field/dark-field imaging optical block and the fluorescence imaging optical block. Hence, the optical arrangements for the bright-field imaging mode and/or the dark-field imaging mode, including the illumination source, the condenser lens, and the at least one optical detection assembly remain in the optical path after being turned by about 90 degrees. Similarly, the optical arrangements for the fluorescence imaging mode, including the excitation light source, the optical filter arrangement, and the at least one optical detection assembly remain in the optical path after being turned by about 90 degrees.

According to an embodiment of the present invention, the apparatus further comprises a control unit. The control unit is configured to control the at least one translation unit and the acquisition of images. The control unit comprises a feedback loop for repeatedly performing a sequence during the first scan and during the second scan comprising: i) acquiring an image and ii) adjusting the relative position of the sample container and the optical detection assembly. The control unit is configured to control the rotation unit to rotate the at least one optical detection assembly when the first scan is complete.

The controlling unit may be a data processing element such as a microprocessor, microcontroller, field programmable gate array (FPGA), central processing unit (CPU), digital signal processor (DSP) capable of providing activation signal to a motor, such as stepper motor, direct drive, DC servo motors, or piezo resonant motors of the at least one translation unit and the rotation unit to cause them to move the at least one optical detection assembly and/or the sample container. The controlling unit is capable of providing activation signals to the at least one translation unit and the rotation unit via a universal service bus (USB), a local area network connection (LAN), or another form of data connection.

This may allow the apparatus to operate in an automated manner. For example, the movement may be controlled by the controlling unit to perform in a substantially continuous manner with a predetermined time interval and in substantially identical movement steps of a predetermined step lengths during the first scan and the second scan.

According to an embodiment of the present invention, the apparatus further comprises a combining unit configured to combine the plurality of first and second images to create a three-dimensional reconstruction of the sample.

The combining unit may be a data processing element such as a microprocessor, microcontroller, FPGA, CPU, DSP, or graphics processing unit (GPU) capable of computationally combining image data from a collection or stack of images.

According to a second aspect of the present invention, a method is provided for obtaining a plurality of images of a sample arranged in relation to a sample container. The method comprises the following steps:

- arranging the sample in relation to a sample container;
- arranging the sample container in relation to an apparatus according to any of claims 1 to 11, wherein the at least one translation unit and the at least one optical detection assembly of the apparatus are arranged so that at least a part of the sample is intersected by an image acquisition area;
- moving the sample container and the at least one optical detection assembly relative to each other in a first scanning direction along a first scanning path to perform a first scan;
- obtaining a plurality of first images during the first scan; and
- performing the following steps i) or ii):

    i) rotating the at least one optical detection assembly around an axis of rotation by an angle of about 90 degrees such that a second scanning direction is orthogonally to the first scanning direction, wherein the axis of rotation is perpendicular to a plane defined by the optical axis and the first scanning direction;

    - moving the sample container and the at least one optical detection assembly relative to each other in the second scanning direction along a second scanning path to perform a second scan; and
    - obtaining a plurality of second images for being combined with the plurality of first images to create a three-dimensional reconstruction of the sample; or

    ii) rotating the sample container around an axis of rotation by an angle of about 90 degrees, wherein the axis of rotation is perpendicular to a plane defined by the optical axis and the first scanning direction;

- moving the sample container and the at least one optical detection assembly relative to each other in a second scanning direction along a second scanning path to perform a second scan, wherein the second scanning direction is parallel to the first scanning direction; and
- obtaining a plurality of second images of the sample for being combined with the plurality of first images to create a three-dimensional reconstruction of the sample.

This method essentially reflects the operating principle of the apparatus as described above and below. In particular, the second extra scan then provides the axial information of the first scan at the desired high lateral resolution, while maintaining a high imaging speed of the system. Images from the first scan and the second scan may be simply combined to create a three-dimensional reconstruction of the sample with a desired lateral resolution in both the horizontal plane and the axial direction.

According to an embodiment of the present invention, the plurality of first and second images are combined to create a three-dimensional reconstruction of the sample.

A second aspect of the invention relates to a computer program element for controlling an apparatus as described above and below, which, when being executed by a processing unit, is adapted to carry out the step of operating the apparatus.

A fourth aspect of the invention relates to a computer readable medium having stored the computer program element.

These and other aspects of the present invention will become apparent from and be elucidated with reference to the embodiments described hereinafter.

BRIEF DESCRIPTION OF THE DRAWINGS

Exemplary embodiments of the invention will be described in the following with reference to the following drawings:

Fig. 1A schematically shows a side view of an apparatus for obtaining a plurality of images of a sample arranged in a sample container according to some embodiments of the present disclosure.
Fig. 1B schematically shows a side view of an apparatus according to some embodiments of the present disclosure, in which the at least one optical detection assembly is rotatable.
Fig. 1C schematically shows a side view of an apparatus according to some embodiments of the present disclosure, in which the sample container is rotatable.

Fig. 2A schematically shows a side view of an apparatus for obtaining a plurality of images of a sample arranged in a sample container according to some embodiments of the present disclosure.
Fig. 2B schematically shows a side view of an apparatus according to some embodiments of the present disclosure, in which the at least one optical detection assembly is rotatable.
Fig. 2C schematically shows a side view of an apparatus according to some embodiments of the present disclosure, in which the sample container is rotatable.
Fig. 3A schematically shows an apparatus according to some further embodiments of the present disclosure.
Fig. 3B schematically shows an apparatus according to some further embodiments of the present disclosure.
Fig. 4A schematically shows an apparatus according to some further embodiments of the present disclosure.
Fig. 4B schematically shows an apparatus according to some further embodiments of the present disclosure.
Fig. 5A schematically shows a method for obtaining a plurality of images of a sample arranged in a sample container according to some embodiments of the present disclosure.
Fig. 5B schematically shows a method for obtaining a plurality of images of a sample arranged in a sample container according to some further embodiments of the present disclosure.

DETAILED DESCRIPTION OF EMBODIMENTS

Figs. 1A to 1C and 2A to 2C schematically show an apparatus 10 for obtaining a plurality of images of a sample 12 arranged in a sample container 14 according to some embodiments of the present disclosure. In particular, Figs. 1A to 1C illustrates an example of the apparatus 10 configured for performing a non-tilted angle scanning of the sample, and Figs. 2A to 2C illustrates another example of the apparatus 10 configured for performing a tilted angle scanning of the sample.

Fig. 1A shows a side view of the apparatus 10 in a first scan, also referred to as normal scan. Referring to the coordinate system 16, the sample container 14 has a first confinement 18a and a second confinement 18b confining the sample 12 in the z-direction, and a second confinement 20a and a fourth confinement 20b confining the sample 12 in the x-direction. The sample container 14 may extend beyond an image acquisition area 22 in the x-direction and in the y-direction. For example, the sample container may be a micro- or multiwell plate, which is a flat plate with multiple "wells" used as small test tubes. A microplate may have 6, 12, 24, 48, 96, 384 or 1536 sample wells arranged in a rectangular matrix. The first confinement 18a, the second confinement 18b, the second confinement 20a, and the fourth confinement 20b are configured to be transparent to the electromagnetic waves, such as UV light, visible light, IR light, and/or NIR light. The sample container 14 may have a tubular confinement, such as a substantially cylindrical shaped confinement as illustrated in Figs. 2A and 2B. For example, US 2019/0105024 A1 describes a biopsy container with a tubular confinement.

The apparatus comprises at least one optical detection assembly 24. The apparatus further comprises at least one translation unit 26 (not shown in Figs.1A-1C), such as an x-y translation stage 26a and a z-axis translation stage 26b in Figs. 3A and 3B, and a rotation unit 28 (not shown in Figs. 1A-1C, see an example in Figs. 3A and 3B).

The at least one optical detection assembly 24 comprises an imaging acquisition device 30. The image acquisition device 30 maybe any electronic element capable of converting the light intensity incident on the element into proportional electronic signals representative of the dark-field, bright-field, and/or fluorescence light received from the sample. Such an image sensor may be implemented using, for example, a charge-coupled device or a CMOS imaging sensor, coupled to appropriate analogue and/or signal processing circuitry. The at least one optical detection assembly 24 may have an objective lens 32 that gathers light from the image acquisition area 22 and focuses the light rays onto the image acquisition device 30 to produce an image. The at least one optical detection assembly 24 may comprise one or more lenses for shaping the beam and for enlargement of the images. The at least one optical detection assembly 24 may also comprise other optical components including, but not limited to, mirrors, irises, wedges, prisms, pinholes, holograms, and Fresnel-lenses.

The at least one optical detection assembly 24 has an optical axis 34 and an object plane 36 perpendicular to the optical axis 34. The optical axis 34 of the at least one optical detection assembly 24 is an imaginary line that defines a path along which light propagates from the sample 12 to the image acquisition device 30. If the at least one optical detection assembly comprises optical elements that can change the direction of the light path, the optical axis 34 is defined as the imaginary line that defines a path along which light propagates from the sample 12 to the first optical element that alters the direction of the light path. The object plane 36 comprises the image acquisition area 22 from which electromagnetic waves can be detected as an image by the image acquisition device 30. The at least one translation unit 26 and the at least one optical detection assembly 24 are arranged so that at least a part of the sample 12 is intersected by the image acquisition area 22. Thus, a two-dimensional image of the image acquisition area 22 of the sample 12 can be imaged onto the image acquisition device 30.

The at least one translation unit 26, e.g. one or more motorized translation stages, is configured to move the sample container 14 and the at least one optical detection assembly 24 relative to each other in a first scanning direction 38 along a first scanning path 40 to perform a first scan to obtain a plurality of first images 42, such as 42a, 42b, 42c, and 42d illustrated in Fig. 1A, of the sample 12.

The first scanning path 40 defines an angle theta θ relative to the object plane 36. In some example, as illustrated in Figs. 1A to 1C, the angle theta θ is a zero degree. In other words, the translation of the sample 12 and the at least one optical detection assembly 24 relative to each other is parallel to the object plane 36 of the at least one optical detection assembly 24. Thus, the image acquisition device 30 may acquire a sequence of non-tilted images along a scanning path. In some other examples, as illustrated in Figs. 2A to 2C, the apparatus may be configured to perform a tilted angle scanning of the sample. The theta θ may be in a range of about 0.3 and about 89.7 degrees. Such tilting may facilitate the scanning of volumes by recording a series of images to form an image stack. The tilting may enable more freedom of operation at both high and low concentrations of the sample.

In the illustrated exemplary embodiment, the at least one translation unit 26 is configured to move the sample container 14 and the at least one optical detection assembly 24 relative to each other in the x-direction. Optionally, the at least one translation unit may also be configured to move the sample container 14 and the at least one optical detection assembly 24 relative to each other in the y-direction to enlarge the measurement volume. It is therefore preferred that the size of the sample in the y-direction is sufficiently large to comprise the desired number of steps in that direction. As a further option, a translation unit for moving the sample container 14 and the at least one optical detection assembly 24 relative to each other in a depth direction, also referred to as first depth direction 62a, may be used to acquire successive image slices along the z-axis, i.e. in a depth direction, for making up a "z-stack", which can either be processed by certain software to create a three-dimensional image, or it is merged into a two-dimensional stack. The scan in the depth direction may be beneficial for creating a three-dimensional reconstruction of a thick sample or a stack of samples.

In principle, the first scanning path 40 may comprise any movement of the object plane 36 and the sample 12 relative to each other. In an example, as illustrated in Fig. 1A, the first scanning path 40 may comprise a substantially straight scanning line arranged along a scanning axis. In another example (not shown), the first scanning path 40 may also be defined by a substantially rotational movement, in which case theta is the angle between said optical axis and the local tangential of said rotational movement. In a further example, the first scanning path 40 is confined to a plane, such as a straight line, a circular movement, a spiral movement, or any other suitable path. This may be achieved with the aid of e.g. a multi-axis scanning arm. The step size of the movement in the x-direction may be smaller than the Depth of Field (DOF) of the objective lens 32. The DOF is the portion of a scene that appears sharp in the image. This may ensure that two subsequent images captured by the image acquisition device 30 have an overlapping part.

When considering resolution in the first scan, the lateral resolution $R_{lateral}$ in the plane perpendicular to the optical axis 32 is related to the numerical aperture of the objective lens 32, which can be defined as follows [1]:

$$R_{lateral} = \frac{0.61\lambda}{NA}$$

where $\lambda$ is the wavelength of the light.

Another aspect to the resolution is the axial (or longitudinal) resolving power of the objective lens 32, which is measured parallel to the optical axis 34. The axial resolution $R_{axial}$ is also related to the numerical aperture, which can be defined as follows [2]:

$$R_{axial} = \frac{\lambda \cdot n}{NA^2} + \frac{n \cdot e}{M \cdot NA}$$

where $e$ is the pixel size of the image acquisition device 30, $n$ is the refractive index of the immersion fluid and M is the magnification.

A potential issue is that the axial resolution is different from the lateral resolution. For the previously mentioned setup, the axial resolution may be around 4 to 5 $\mu$m, whereas the lateral resolution may be around 1 $\mu$m. Thus, the axial resolution is a factor of 4 less than the lateral resolution. The disadvantage of this is that the three-dimensional rendering of the sample has elongated data in the z-direction. Thus, the three-dimensional rendering of the sample does not look as "good" as pathologists or doctors, such as an interventional radiologists may like, as the z-resolution limitation may affect their analysis of the sample, such as judging the quality of a biopsy.

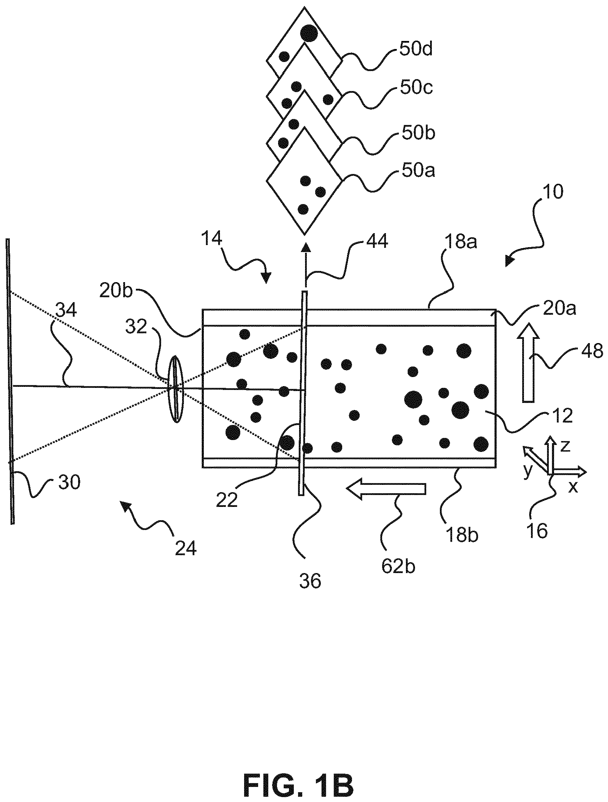

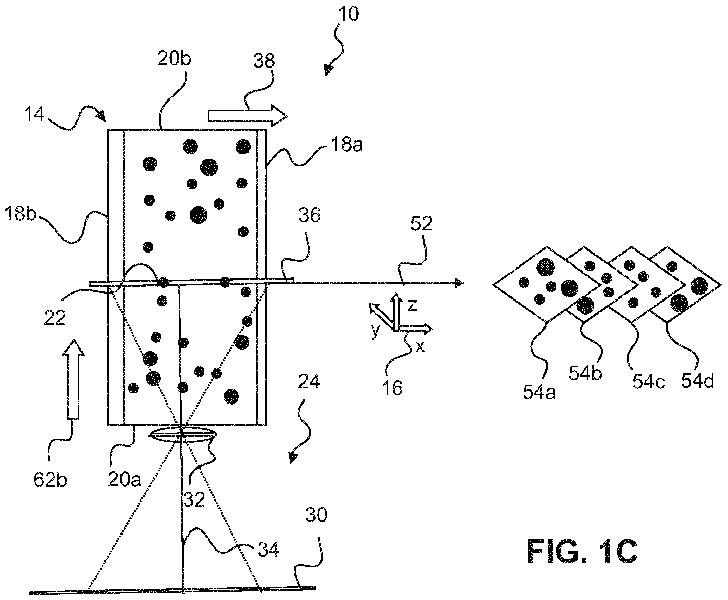

In other to improve the z-axis resolution, the following two alternative solutions are provided. The first solution, as illustrated in Fig. 1B, is to perform a second scan after rotation of the at least one optical detection assembly by about 90 degrees, and the second solution, as illustrated in Fig. 1C, is to perform a second scan after rotation of the sample container by about 90 degrees. The second scan may also be referred to as extra scan.

Turning to Fig. 1B, which illustrates the first solution, the rotation unit 28 is configured to rotate the at least one optical detection assembly 24 around an axis of rotation, i.e. y-axis in Fig. 1A, by an angle of about 90 degrees such that a second scanning direction 48 is orthogonally to the first scanning direction 38. The axis of rotation is perpendicular to a plane defined by the optical axis 34 and the first scanning direction 38. Because of the rotation of the at least one optical detection assembly 24, the optical axis 32 of the at least one optical detection assembly 24 and the object plane 36 are also turned by about 90 degrees. When an extra scan is performed along the z-direction, the resolution in the horizontal x-y plane in the first scan will become the resolution in the vertical y-z plane in the extra scan. A resolution of about 1 $\mu$m can thus be obtained in the z-axis.

The rotation unit 28 may be a rotation stage or a rotation mount, which may be equipped with stepper motor, direct drive, DC servo motors, or piezo resonant motors to perform the rotation. The rotation may be either a clockwise rotation or a counter-clockwise rotation. The at least one optical detection assembly 24 may be directly coupled to the rotation unit 28 or indirectly coupled to the rotation unit 28, e.g. via a mechanical arm. Preferably, the rotation unit is configured to offer a precision position control with a resolution of up to 1 degree, or more preferably up to 0.5 degree. The precision position control may reduce the error in rotationally positioning the at least one optical detection assembly and thus the error in the three-dimensional reconstruction of the sample.

The at least one translation unit 26 is configured to move the sample container 14 and the at least one optical detection assembly 24 relative to each other in the second scanning direction 48 along the second scanning path 44 to perform a second scan to obtain a plurality of second images 50, such as 50a, 50b, 50c, and 50d in Fig. 1B, of the sample 12 for being combined with the plurality of first images 42 to create a three-dimensional reconstruction of the sample. The at least one translation unit may also be configured to move the sample container 14 and the at least one optical detection assembly 24 relative to each other in the y-direction to enlarge the measurement volume. It is therefore preferred that the size of the sample in the y-direction is sufficiently large to comprise the desired number of steps in that direction. As a further option, a translation unit for moving the sample container 14 and the at least one optical detection assembly relative to each other in the x-direction may be used to acquire successive image slices along the x-axis, i.e. in a depth direction, for making up a "z-stack". The depth direction of the second scan may also be referred to as second depth direction 62b. The acquired second images may be saved and/or transmitted to an external device, such as a computer, for further analysis. The second scanning path 44 may comprise any movement of the object plane 36 and the sample 12 relative to each other, including a straight line, a circular movement, a spiral movement, or any other suitable path.

As the sample is not moved during the rotation of the at least one optical detection assembly, the acquired second images and the acquired first images can be simply combined to create a three-dimensional reconstruction of the sample without the need for registering the second scan to the first scan. The three-dimensional rendering of the sample based on a combination of the first and second images has the same resolution of about

1 μm in the horizontal plane and in the axial direction. This may facilitate pathologists and interventional radiologists to analyse the sample.

Turning to Fig. 1C, which illustrates the second solution, instead of rotating the at least one optical detection assembly 24, the rotation unit 28 is configured to rotate the the sample container 14 around an axis of rotation, i.e. y-axis in Fig. 1A, by an angle of about 90 degrees. The axis of rotation is perpendicular to a plane defined by the optical axis 34 and the first scanning direction 38. By turning the sample container 14 by about 90 degrees, the first confinement 18a and the second confinement 18b confine the sample 12 in the x-direction, and the second confinement 20a and the fourth confinement 20b confine the sample in the z-direction.

The sample container 14 may be directly coupled to the rotation unit 28 or indirectly coupled to the rotation unit 28, e.g. via an arm. Examples of the rotation unit may include, but not limited to, rotation stages or a rotation mounts, which may be equipped with stepper motor, direct drive, DC servo motors, or piezo resonant motors. Preferably, the rotation unit is configured to offer a precision position control with a resolution of up to 5 degrees, or more preferably up to 1 degree, or even more preferably up to 0.5 degree. The precision position control may reduce the error in rotationally positioning the at least one optical detection assembly and thus the error in the three-dimensional reconstruction of the sample.

The at least one translation unit 26 is configured to move the sample container 14 and the at least one optical detection assembly 24 relative to each other in a second scanning direction along a second scanning path 52 to perform a second scan to obtain a plurality of second images 54, such as 54a, 54b, 54c, and 54d in Fig. 1C, of the sample 12 for being combined with the plurality of first images 42 to create a three-dimensional reconstruction of the sample 12. The second scanning direction is parallel to the first scanning direction 38. The at least one translation unit may also be configured to move the sample container 14 and the at least one optical detection assembly 24 relative to each other in the y-direction to enlarge the measurement volume. It is therefore preferred that the size of the sample in the y-direction is sufficiently large to comprise the desired number of steps in that direction. As a further option, a translation unit for moving the sample container 14 and the at least one optical detection assembly 24 relative to each other in the z-direction may be used to acquire successive image slices along the z-axis, i.e. in a depth direction, for making up a "z-stack". Similarly, the depth direction for the second scan may also be referred to as second depth direction 62b. The acquired second images may be saved and/or transmitted to an external device, such as a computer, for further analysis.

The acquired second images may be combined with the acquired first images to create a three-dimensional reconstruction of the sample. Similar to the first solution, the three-dimensional rendering of the sample based on a combination of the first and second images has the same resolution of about 1 μm in the horizontal plane and in the axial direction. This may facilitate doctors such as pathologists and interventional radiologists to analyse the sample, e.g. judging the quality of a biopsy. This may also facilitate doctors, such as oncologists or surgeons, to see if a caner is still operable, i.e. close to other organs.

As previously mentioned, Figs. 2A to 2C schematically show another example of the apparatus 10 configured for performing a tilted angle scanning of the sample. The operating principle of the apparatus described in Figs. 1A to 1C is essentially the same for the apparatus 10 in Figs. 2A to 2C.

Figs. 3A and 3B schematically show an apparatus 10 according to another exemplary embodiment of the present disclosure. The apparatus 10 may be configured to operate in a bright-field imaging mode, in a dark-field imaging mode, in a fluorescence imaging mode and any combination thereof.

In some examples, as illustrated in Figs. 3A and 3B, the apparatus 10 may comprise a bright-field/dark-field imaging optical block 56. The bright-field/dark-field imaging optical block 56 may have an illumination source (not shown) for illuminating the sample 12 within the sample container 14 in a bright-field imaging mode and/or in a dark-field imaging mode. Examples of the illumination source may include a white light source or one or multiple LED light sources, optionally arranged on an opposite side of the sample 12 to the at least one optical detection assembly 24. In the bright-field mode, when the illumination source is active, its illumination penetrates through sample 12 and the transmitted light is detected by the image acquisition device 30 for generating bright-field image data of the sample. In the dark-field imaging mode, when the illumination source is active, a cone of light is created to illuminate the sample 12 and the angle of the light is chosen such that the direct light does not enter directly in the imaging path. For example, a central aperture may be used to block the central part of the illumination beam, thereby creating a cone of light. Optionally, the bright-field/dark-field imaging optical block 56 may further comprise a condenser lens (not shown) for focusing the illumination from the illumination source onto the sample.

The rotation unit 28 is further configured to rotate the bright-field/dark-field imaging optical block 56 around the axis of rotation by an angle of about 90 degrees to perform the second scan. For example, as illustrated in Figs 3A and 3B, a scanning arm 60 may be provided to support the bright-field/dark-field imaging block 56 via a first arm 60a. The first arm 60a is rotationally coupled to the rotation unit 28 such that the bright-field/dark-field imaging optical block 56 can be turned by about 90 degrees by the rotation unit 28. This may ensure that the illumination source, the optional condenser lens, the sample 12, and the at least one optical detection assembly 24 remaining in the optical path after the rotation.

In some examples, as illustrated in Figs. 3A and 3B, a fluorescence imaging optical block 58 may be provided additionally or alternatively to the bright-field/dark-field imaging optical block 56. The fluorescence imaging optical block 58 comprises an excitation light source (not shown) configured to emit excitation light onto the sample within the sample container for generating fluorescence light in a fluorescence imaging mode. The excitation light source may be e.g. an LED light source capable of providing excitation light matched to a fluorescent dye. Optionally, a plurality of excitation light sources, each targeted to a different type of fluorescent dye, may be provided. The fluorescence imaging optical block 50 may comprise an optical filter arrangement configured to match a spectral characteristics of the excitation light and/or the fluorescence light. For example, the optical filter arrangement may comprise a dichroic filter, an emission filter, and/or an excitation filter. A prism setup may also be used for selecting emission and/or excitation light.

The rotation unit 28 is configured to rotate the fluorescence imaging optical block 58 around the axis of rotation by an angle of about 90 degrees to perform the second scan. For example, as illustrated in Figs. 3A and 3B, the scanning arm 60 may have a second arm 60b for supporting the fluorescence imaging optical block 58. The second arm 60b is rotationally coupled to the rotation unit 28 such that the fluorescence imaging optical block 58 can be turned by about 90 degrees by the rotation unit 28. This may ensure that the excitation light source, the optical filter arrangement, the sample 12, and the at least one optical detection assembly 24 remaining in the optical path after the rotation.

The scanning arm may also be configured to perform a multi-axis scan. For example, the scanning arm may be configured to perform a scan along a scanning path including, but not limited to, a straight line, a circular movement, a spiral movement, or any other suitable path.

Optionally, the at least one optical detection assembly 24 may be arranged in the fluorescence imaging optical block 58. A translation unit may be provided in the fluorescence imaging optical block 58 for moving the at least one optical detection assembly 24 relative to the sample container 14 in a depth direction. In some examples, as illustrated in Figs. 3A and 3B, a z-axis translation stage 26b, indicated by an arrow, may be provided for moving the sample container 14 relative to the at least one optical detection assembly in the depth direction. An x-y translation stage 26a may be provided to move the bright-field/dark-field and/or fluorescence imaging optical blocks relative to the sample container 14 in the horizontal x-y plane.

Optionally, the apparatus may further comprise a control unit 64. The control unit 64 is configured to control the at least one translation unit 26, such as x-y translation stage 26a and the z-axis translation stage 26b in Figs. 3A and 3B, and the acquisition of images. The control unit 64 comprises a feedback loop for repeatedly performing a sequence during the first scan and during the second scan comprising: i) acquiring an image and ii) adjusting the relative position of the sample container and the optical detection assembly. The control unit 64 is configured to control the rotation unit 28 to rotate the at least one optical detection assembly 24 when the first scan is complete.

Optionally, the apparatus 10 may further comprise a combining unit (not shown) configured to combine the plurality of first and second images or the plurality of first and second images to create a three-dimensional reconstruction of the sample.

Figs. 4A and 4B show another example of the apparatus 10 with a similar scanning arm 60. In this example, a multi-axis translation stage, e.g. an x-y-z translation stage as illustrated in Figs. 4A and 4B, may be provided in the fluorescence imaging optical block 58 for moving the sample container 14 relative to the at least one optical detection assembly 24 in the depth direction before and after the rotation of the scanning arm 60.

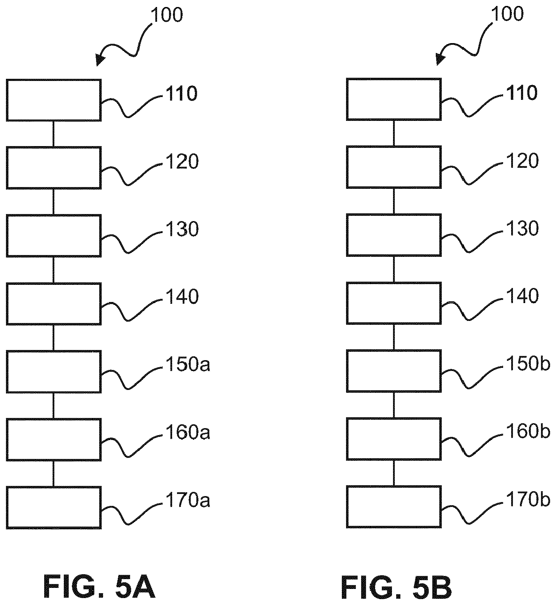

Figs. 5A and 5B schematically show a method 100 for obtaining a plurality of images of a sample arranged in relation to a sample container according to some exemplary embodiments of the present disclosure. In particular, Fig. 5A shows an exemplary embodiment in which the at least one optical detection assembly 24 is rotatable, and Fig. 5B shows an exemplary embodiment in which the sample container is rotatable.

In step 110, the sample is arranged in relation to a sample container. For example, the sample container may be a well plate or microplate with multiple "wells" used as small test tubes. The sample may be arranged in some of these wells. For example, the sample container may be a biopsy container.

In step 120, the sample container is arranged in relation to an apparatus as described above. The at least one translation unit and the at least one optical detection assembly are arranged so that at least of the sample is intersected by an image acquisition area.

In step 130, the sample container and the at least one optical detection assembly are moved relative to each other in a first scanning direction along a first scanning path to perform a first scan. In some examples, the at least one translation unit may comprise a movable sample stage for moving the sample container relative to the at least one optical detection assembly. In some examples, the at least one translation unit may be configured to move the at least one optical detection assembly relative to the at least one optical detection assembly. The first scanning path defines an angle theta relative to the object plane. The apparatus may be configured to perform a tilted angle scanning by configuring the theta in a range of about 0.3 and about 89.7 degrees. Alternatively, the apparatus may be configured to perform a non-tilted angle scanning by configuring the theta to be about zero degree.

In step 140, a plurality of first images are obtained during the first scan. The first scan may acquire a sequence of tilted or non-tilted images along a horizontal plane. As further options, a translation unit for moving the sample container and the at least one optical detection assembly relative to each other in a depth direction may be used to acquire successive image slices in multiple horizontal planes along in a depth direction for making up a "z-stack".

Turning to Fig. 5A, in step 150a, the at least one optical detection assembly is rotated around an axis of rotation by an angle of about 90 degrees such that a second scanning direction is orthogonally to the first scanning direction. The axis of rotation is perpendicular to a plane defined by the optical axis and the first scanning direction. The rotation may be a clockwise or counterclockwise rotation.

In step 160a, the sample container and the at least one optical detection assembly are moved relative to each other in the second scanning direction along a second scanning path to perform a second scan.

In step 170a, a plurality of second images may be obtained for being combined with the plurality of first images to create a three-dimensional reconstruction of the sample. The plurality of second images may comprise a plurality of images acquired at multiple different depths in a depth direction. The plurality of first and second images may be stored and outputted for further data analysis. For example, the plurality of first images and second images may be combined to create a three-dimensional reconstruction of the sample.

Turning to Fig. 5B, in step 150b, the sample container is rotated around an axis of rotation by an angle of about 90 degrees. The axis of rotation is perpendicular to a plane defined by the optical axis and the first scanning direction.

In step 160b, the sample container and the at least one optical detection assembly are moved relative to each other in a second scanning direction along a second scanning path to perform a second scan, wherein the second scanning direction is parallel to the first scanning direction.

In step 170b, a plurality of second images of the sample is obtained for being combined with the plurality of first images to create a three-dimensional reconstruction of the sample. The plurality of first and second images may be stored and outputted for further data analysis. For example, the plurality of first images and second images may be combined to create a three-dimensional reconstruction of the sample.

Optionally, the plurality of first and second images are combined to create a three-dimensional reconstruction of the sample.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are re-cited in mutually different dependent claims does not indicate that a combination of these measures cannot be used to advantage. Any reference signs in the claims should not be construed as limiting the scope.

REFERENCES

1. Smith, Warren J. (2000), Modern Optical Engineering (Third Edition), McGraw-Hill Professional. ISBN 0-07-136360-2.
2. https://www.microscopyu.com/microscopy-basics/depth-of-field-and-depth-of-focus

**Claims**

1. An apparatus (10) for obtaining a plurality of images of a sample (12) arranged in relation to a sample container (14), the apparatus comprising:

   - at least one optical detection assembly (24); and
   - at least one translation unit (26, 26a, 26b);

   wherein the at least one optical detection assembly comprises an image acquisition device (30), wherein the at least one optical detection assembly has an optical axis (34) and an object plane (36), the object plane comprising an image acquisition area (22) from which electromagnetic waves can be detected as an image by the image acquisition device;
   wherein the at least one translation unit and the at least one optical detection assembly are arranged so that at least a part of the sample is intersected by the image acquisition area;
   wherein the at least one translation unit is configured to move the sample container and the at least one optical detection assembly relative to each other in a first scanning direction (38) along a first scanning path (40) to perform a first scan to obtain a plurality of first images (42, 42a, 42b, 42c, 42d) of the sample;
   wherein the apparatus further comprises:

   - a rotation unit (28) configured to:

       i) rotate the at least one optical detection assembly around an axis of rotation by an angle of about 90 degrees such that a second scanning direction (48) is orthogonally to the first scanning direction, wherein the axis of rotation is perpendicular to a plane defined by the optical axis and the first scanning direction;
       wherein the at least one translation unit is configured to move the sample container and the at least one optical detection assembly relative to each other in the second scanning direction along a second scanning path (44) to perform a second scan to obtain a plurality of second images (50, 50a, 50b, 50c, 50d) of the sample for being combined with the plurality of first images to create a three-dimensional reconstruction of the sample; or
       ii) rotate the sample container around an axis of rotation by an angle of about 90 degrees, wherein the axis of rotation is perpendicular to a plane defined by the optical axis and the first scanning direction;
       wherein the at least one translation unit is configured to move the sample container and the at least one optical detection assembly relative to each other in a second scanning direction along a second scanning path (52) to perform a second scan to obtain a plurality of second images (54, 54a, 54b, 54c, 54d) of the sample for being combined with the plurality of first images to create a three-dimensional reconstruction of the sample, wherein the second scanning direction is parallel to the first scanning direction.

2. Apparatus according to claim 1,
   wherein the plurality of first images comprises a plurality of images acquired at multiple depths in a first depth direction (62a) that is perpendicular to the first scanning direction; and/or
   wherein the plurality of second images comprises a plurality of images acquired at multiple depths in a second depth direction (62b) that is perpendicular to the second scanning direction.

3. Apparatus according to any of the preceding claims,
   wherein the apparatus comprises a bright-field/dark-field imaging optical block (56) with an illumination source for illuminating the sample within the sample container in a bright-field imaging mode and/or in a dark-field imaging mode; and
   wherein the rotation unit is further configured to rotate the bright-field/dark-field imaging optical block around the axis of rotation by an angle of about 90 degrees to perform the second scan.

4. Apparatus according to claim 3,
   wherein the bright-field/dark-field imaging optical block further comprises a condenser lens for focusing the illumination from the illumination source onto the sample.

5. Apparatus according to any of the preceding claims,
   wherein the apparatus comprises a fluorescence imaging optical block (58) comprising an excitation light source configured to emit excitation light onto the sample within the sample container for creating fluorescence light in a fluorescence imaging mode;
   wherein the rotation unit is configured to rotate the fluorescence imaging optical block around the axis of rotation by an angle of about 90 degrees to perform the second scan.

6. Apparatus according to claim 5,
   wherein the at least one optical detection assembly is arranged in the fluorescence imaging optical block; and
   wherein a translation unit (26, 26b) is provided in the fluorescence imaging optical block for moving the at least one optical detection assembly relative to the sample container in a depth direction.

7. Apparatus according to any of the preceding claims,
   wherein the first and/or second scanning path defines an angle theta (θ) relative to the object plane, wherein the theta is in a range of about 0.3 and about 89.7 degrees.

8. Apparatus according to any of the preceding claims,
   further comprising:

   - a scanning arm (60) for supporting the at least one optical detection assembly;

   wherein the rotation unit is configured to rotate the at least one optical detection assembly by rotating the scanning arm.

9. Apparatus according to claim 8,
   wherein the scanning arm comprises a first arm (60a) for supporting the bright-field/dark-field imaging optical block and a second arm (60b) for supporting the fluorescence imaging optical block, which is arranged to be opposite to the bright-field/dark-field imaging optical block.

10. Apparatus according to any of the preceding claims,
    further comprising:

    - a control unit (64);

wherein the control unit is configured to control the at least one translation unit and the acquisition of images, the control unit comprises a feedback loop for repeatedly performing a sequence during the first scan and during the second scan comprising:

   i) acquiring an image; and
   ii) adjusting the relative position of the sample container and the optical detection assembly; and

wherein the control unit is configured to control the rotation unit to rotate the at least one optical detection assembly when the first scan is complete.

11. Apparatus according to any of the preceding claims,
    further comprising:

    - a combining unit configured to combine the plurality of first and second images to create a three-dimensional reconstruction of the sample.

12. A method (100) for obtaining a plurality of images of a sample arranged in relation to a sample container, the method comprising:

    - arranging (110) the sample in relation to a sample container;
    - arranging (120) the sample container in relation to an apparatus according to any of claims 1 to 11, wherein the at least one translation unit and the at least one optical detection assembly of the apparatus are arranged so that at least a part of the sample is intersected by an image acquisition area;
    - moving (130) the sample container and the at least one optical detection assembly relative to each other in a first scanning direction along a first scanning path to perform a first scan;
    - obtaining (140) a plurality of first images during the first scan; and
    - performing the following steps i) or ii)

       i) rotating (150a) the at least one optical detection assembly around an axis of rotation by an angle of about 90 degrees such that a second scanning direction is orthogonally to the first scanning direction, wherein the axis of rotation is perpendicular to a plane defined by the optical axis and the first scanning direction;

          - moving (160a) the sample container and the at least one optical detection assembly relative to each other in the second scanning direction along a second scanning path to perform a second scan; and

- obtaining (170a) a plurality of second images for being combined with the plurality of first images to create a three-dimensional reconstruction of the sample; or

ii) rotating (150b) the sample container around an axis of rotation by an angle of about 90 degrees, wherein the axis of rotation is perpendicular to a plane defined by the optical axis and the first scanning direction;

- moving (160b) the sample container and the at least one optical detection assembly relative to each other in a second scanning direction along a second scanning path to perform a second scan, wherein the second scanning direction is parallel to the first scanning direction; and
- obtaining (170b) a plurality of second images of the sample for being combined with the plurality of first images to create a three-dimensional reconstruction of the sample.

13. Method according to claim 12, further comprising

- combining the plurality of first and second images to create a three-dimensional reconstruction of the sample.

14. Computer program element for controlling an apparatus according to any one of the claims 1 to 11, which, when being executed by a processing unit, is adapted to perform the method steps of any one of the claims 12 to 13.

15. Computer readable medium having stored the program element of claim 14.

**FIG. 1A**

EP 3 748 414 A1

FIG. 1B

FIG. 1C

**FIG. 2A**

FIG. 2B

FIG. 2C

**FIG. 3A**

**FIG. 3B**

**FIG. 4A**

**FIG. 4B**

FIG. 5A          FIG. 5B

Europäisches
Patentamt

European
Patent Office

Office européen
des brevets

## EUROPEAN SEARCH REPORT

Application Number

EP 19 17 9071

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 209570 A1 (ZEISS CARL INDUSTRIELLE MESSTECHNIK GMBH [DE]) 20 December 2018 (2018-12-20) * paragraphs [0016], [0150], [0180] - [0183]; figure 7 * | 1-15 | INV. G02B21/26 G01N21/64 G02B21/36 G02B21/12 |
| X | CN 108 961 419 A (UNIV CHONGQING) 7 December 2018 (2018-12-07) * paragraphs [0097], [0107], [0111], [0117] - [0170]; figures 1,3,5 * | 1-15 | |
| X | US 2014/071452 A1 (FLEISCHER JASON W [US]) 13 March 2014 (2014-03-13) * paragraphs [0005], [0024], [0030], [0035], [0036], [0038], [0040], [0048]; figures 2a, 5,7 * | 1-15 | |
| X | US 7 738 945 B2 (UNIV WASHINGTON [US]; VISIONGATE INC [US]) 15 June 2010 (2010-06-15) * column 7, lines 16-56; figures 3A, 3D, 3F * | 1-15 | |
| A | US 2014/347447 A1 (OLESEN TOM [DK] ET AL) 27 November 2014 (2014-11-27) * claim 1; figure 1 * | 7 | TECHNICAL FIELDS SEARCHED (IPC) G02B G01N |
| A | EP 3 413 033 A1 (ROCHE DIAGNOSTICS GMBH [DE]; HOFFMANN LA ROCHE [CH]) 12 December 2018 (2018-12-12) * paragraphs [0032] - [0036]; figure 1 * | 8,9 | |

The present search report has been drawn up for all claims

| Place of search | Date of completion of the search | Examiner |
|---|---|---|
| Munich | 25 November 2019 | Kaiser, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 9071

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2019

| Patent document cited in search report | | Publication date | Patent family member(s) | | Publication date |
|---|---|---|---|---|---|
| DE 102018209570 | A1 | 20-12-2018 | NONE | | |
| CN 108961419 | A | 07-12-2018 | NONE | | |
| US 2014071452 | A1 | 13-03-2014 | NONE | | |
| US 7738945 | B2 | 15-06-2010 | US 2004076319 A1 | | 22-04-2004 |
| | | | WO 2005050558 A2 | | 02-06-2005 |
| US 2014347447 | A1 | 27-11-2014 | AU 2009321899 A1 | | 14-07-2011 |
| | | | CA 2745587 A1 | | 10-06-2010 |
| | | | CN 102301269 A | | 28-12-2011 |
| | | | EP 2370849 A1 | | 05-10-2011 |
| | | | KR 20110091898 A | | 16-08-2011 |
| | | | RU 2011127424 A | | 10-01-2013 |
| | | | US 2011261164 A1 | | 27-10-2011 |
| | | | US 2014347447 A1 | | 27-11-2014 |
| | | | WO 2010063293 A1 | | 10-06-2010 |
| EP 3413033 | A1 | 12-12-2018 | CN 109030425 A | | 18-12-2018 |
| | | | EP 3413033 A1 | | 12-12-2018 |
| | | | JP 2019002915 A | | 10-01-2019 |
| | | | US 2018356392 A1 | | 13-12-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190105024 A1

**Non-patent literature cited in the description**

- **SMITH, WARREN J.** Modern Optical Engineering. McGraw-Hill Professional, 2000